(19) Europäisches Patentamt
European Patent Office
Office européen des brevets

(11) **EP 1 308 463 B1**

(12) **FASCICULE DE BREVET EUROPEEN**

(45) Date de publication et mention
de la délivrance du brevet:
**22.08.2007 Bulletin 2007/34**

(51) Int Cl.:
*C08B 30/18* (2006.01)  *C08B 31/00* (2006.01)
*A23L 1/308* (2006.01)  *A23L 1/0522* (2006.01)

(21) Numéro de dépôt: **02292643.0**

(22) Date de dépôt: **24.10.2002**

(54) **Dérivés d'amidon hydrogénés solubles contenant des fibres alimentaires non digestibles**

Lösliche hydrierte Stärkederivate enthaltend nicht-verdauliche Fasern

Soluble hydrogenated starch derivatives containing non-digestible fibres

(84) Etats contractants désignés:
**AT BE BG CH CY CZ DE DK EE ES FI FR GB GR IE IT LI LU MC NL PT SE SK TR**

(30) Priorité: **30.10.2001 FR 0114091**

(43) Date de publication de la demande:
**07.05.2003 Bulletin 2003/19**

(73) Titulaire: **Roquette Frères**
**62136 Lestrem (FR)**

(72) Inventeur: **Fuertes, Patrick**
**59130 Lambersart (FR)**

(74) Mandataire: **Boulinguiez, Didier**
**Cabinet Plasseraud**
**52 rue de la Victoire**
**75440 Paris Cedex 09 (FR)**

(56) Documents cités:
**EP-A- 0 338 151**     **EP-A- 0 561 088**
**EP-A- 1 006 128**     **WO-A-92/14761**

• **PATENT ABSTRACTS OF JAPAN vol. 011, no. 300 (C-449), 29 septembre 1987 (1987-09-29) & JP 62 091501 A (SANMATSU KOGYO KK), 27 avril 1987 (1987-04-27)**

**Description**

La présente invention est relative à des dérivés d'amidon hydrogénés solubles contenant des fibres alimentaires non digestibles.

Plus particulièrement, la présente invention est relative à des dérivés d'amidon hydrogénés solubles contenant des fibres alimentaires non digestibles hydrogénées, dont la coloration est diminuée d'au moins 50 %, et dont le contenu en sucres réducteurs est diminué d'au plus 30 % par rapport aux produits à partir desquels ils sont préparés.

L'invention concerne également le procédé d'hydrogénation qui permet de décolorer et de stabiliser en milieu acide les dérivés d'amidon solubles contenant des fibres alimentaires non digestibles sans altérer de manière conséquente leur contenu en sucres réducteurs.

Au sens de l'invention, on entend notamment par « dérivés d'amidon solubles contenant des fibres alimentaires non digestibles » des dérivés d'amidon produits par la combinaison de réactions d'hydrolyse et de transglucosylation (qui se produisent lors des réactions d'hydrolyse) et qui confèrent auxdits dérivés d'amidon des propriétés identiques aux fibres diététiques.

Ces fibres diététiques sont reconnues par l'homme du métier pour leurs effets bénéfiques sur la santé de l'homme. Les fibres sont généralement classées en deux catégories : les fibres solubles et les fibres insolubles.

Les fibres solubles, comme la pectine, l'inuline, sont fermentées par la flore bactérienne intestinale. Cette fermentation libère des acides gras à courte chaîne dans le colon, qui ont pour effet de diminuer le pH de celui-ci et, par voie de conséquence, de limiter le développement de bactéries pathogènes.

Les fibres insolubles, comme la cellulose, les amidons résistants, les fibres de maïs ou de soja ont un rôle essentiellement mécanique dans le tractus gastro-intestinal. Elles ne sont que très peu fermentées par la flore intestinale et contribuent à la réduction de la durée du transit intestinal.

Il est connu dans l'état de la technique un certain nombre de technologies développées afin de traiter l'amidon pour lui conférer des propriétés de fibres alimentaires, et obtenir ainsi des amidons résistants (ENGLYST et CUMMINGS dans American Journal of Clinical Nutrition en 1987, volume 45 pp 423-431).

Il est ainsi classiquement procédé au traitement d'un amidon par un acide alimentaire à haute température. Ce traitement thermique va alors générer des dérivés d'amidon de type pyrodextrines, dextrines blanches ou jaunes, en fonction de la dose d'acide, de la teneur en eau des amidons, et des intervalles de température mis en oeuvre, ces dérivés d'amidon étant résistants à la digestion et à l'absorption dans l'intestin grêle chez l'homme.

En effet, si les amidons et maltodextrines standards ne possèdent que des liaisons glucosidiques de type $\alpha$-1,4 et $\alpha$-1,6, le traitement thermique en conditions acides va produire également des liaisons atypiques de type 1,2 et 1,3 (en anoméries $\alpha$ ou $\beta$) qui ne sont pas hydrolysées par les enzymes de digestion humaines.

Ces traitements physiques sont souvent complémentés par des traitements enzymatiques pour renforcer le caractère de fibres alimentaires des dérivés d'amidon ainsi obtenus. Dans les brevets EP 368.451 et US 5.264.568, par exemple, il est décrit ainsi un procédé de préparation de pyrodextrines, auxquelles on renforce les caractéristiques de fibres alimentaire par action d'une $\alpha$-amylase ou de plusieurs $\alpha$-amylases successivement sur une dextrine ou sur une pyrodextrine en solution à haute température.

Dans le brevet EP 530.111, sont décrites des dextrines indigestibles obtenues par extrusion d'amidon de maïs acidifié déshydraté dans des conditions particulières. Ce traitement peut être complété par l'action d'une $\alpha$-amylase thermorésistante.

La société Demanderesse a également décrit dans sa demande de brevet EP 1.006.128 des « maltodextrines branchées » présentant entre 15 et 35 % de liaisons glucosidiques 1-6, une teneur en sucres réducteurs inférieure à 20 %, un indice de polymolécularité inférieur à 5 et une masse moléculaire moyenne en nombre Mn au plus égale à 4500 g/mole.

Ces maltodextrines branchées présentent surtout un caractère d'indigestibilité qui a pour conséquence de diminuer leur pouvoir calorique, en empêchant leur assimilation au niveau de l'intestin grêle, et elles constituent ainsi une source de fibres indigestibles.

A titre indicatif, leur taux de fibres insolubles est généralement supérieur à 50 % sur matière sèche, valeur déterminée selon la méthode AOAC N° 985-29 (1986).

Cependant, la préparation de tous ces dérivés d'amidon à haute température s'accompagne quasi simultanément d'un problème de coloration desdits produits.

Ces problèmes de coloration peuvent apparaître tout d'abord en amont, au moment de l'élaboration des dérivés d'amidon solubles contenant des fibres alimentaires non digestibles.

La contrainte est alors de contrôler finement les réglages des appareils mis en oeuvre. C'est ainsi que dans le brevet EP 530.111, la coloration importante du produit est abaissée partiellement par la limitation des paramètres d'extrusion. Il ne faut pas excéder une température de 170°C.

Ensuite, ces problèmes de coloration peuvent apparaître au niveau des étapes de purification, comme il est indiqué dans la demande de brevet EP 477.089.

**EP 1 308 463 B1**

Cette purification des pyrodextrines traitées à l'α-amylase est classiquement conduite sur des résines de chromatographie qui permettent d'éliminer le glucose résiduel des composés de haut poids moléculaire ainsi obtenus.

La purification doit alors être réalisée à une température comprise entre 20 et 70°C afin d'éviter des problèmes de coloration, car il a été constaté qu'au delà de 70°C, le produit devient brun ou se dégrade à la sortie desdites colonnes de purification. Mais ce contrôle de la température n'abaisse qu'imparfaitement la coloration du produit final.

C'est ainsi que trois solutions sont préconisées pour remédier à ces problèmes de coloration, voire d'odeurs.

La première solution consiste à mettre en oeuvre des techniques de décoloration sur charbon actif.

C'est ainsi que dans la demande de brevet EP 485.304 et dans le brevet EP 516.491 est décrite la décoloration des dextrines sur charbon actif ou passage sur résines (à une température de 20 à 70°C).

Cependant, comme il est connu par ailleurs de l'homme du métier, cette technique de décoloration est lourde et fastidieuse, car elle nécessite non seulement de régénérer la colonne de noir utilisée, mais également de déminéraliser la solution décolorée ainsi obtenue sur une résine cationique forte, puis une résine anionique faiblement basique afin d'éliminer l'ensemble des sels inorganiques encore présents.

La deuxième solution consiste à ajouter des agents de blanchiment dans la solution à décolorer.

Il est ainsi décrit dans le brevet US 4.622.233 l'addition d'un agent de blanchiment de type peroxyde d'hydrogène, peroxyde de benzoyle ou chlorite de sodium pour décolorer le polydextrose.

Cependant ces agents de blanchiment ne sont pas neutres, et altèrent également la nature physique des produits à décolorer. Cet inconvénient serait d'autant plus marqué pour les dérivés d'amidon solubles contenant des fibres alimentaires non digestibles.

Une troisième solution, plus satisfaisante que les deux précédentes, consiste à hydrogéner le produit à décolorer.

En effet, sans être lié par une quelconque théorie, les phénomènes de coloration sont classiquement attribués à la présence de liaisons insaturées dans les produits susceptibles de se colorer à haute température.

Soit ces liaisons insaturées sont liées au pouvoir réducteur des dérivés d'amidon : il s'agit alors des fonctions carbonyle qui, en présence de dérivés azotés, conduisent à haute température aux produits colorés de la réaction de MAILLARD.

Soit ces liaisons insaturées correspondent à des liaisons de type alcènes (qui sont générées indirectement lors de la réaction en milieu acide et à haute, voire très haute, température) ou des produits de polymérisation et d'anhydrisation (produits de type humines).

Dans la demande de brevet WO 92.14761, il est par exemple décrit l'hydrogénation du polydextrose (ou du polymaltose) comme solution à ces problèmes de mauvais goût (lié à l'anhydroglucose) et de couleur.

Il était connu de pallier cet inconvénient par traitement dans un solvant et avec un agent de blanchiment, mais la technique préférée proposée dans la demande de brevet WO 92.14761 consiste à chauffer en présence d'un catalyseur d'hydrogénation et d'hydrogène.

L'hydrogénation catalytique est ainsi menée avec un catalyseur de type nickel à un pH proche de la neutralité, à des pressions et températures élevées (entre 90 et 120 bars et entre 140 et 160°C) et dans un temps de réaction de 30 minutes à 1 heure.

Il est également possible d'utiliser un agent réducteur comme le borohydrure de sodium ou de potassium.

Par exemple, pour la réaction avec le borohydrure de sodium, la réaction demande au moins 0,5 % dudit borohydrure, et nécessite de travailler à un pH alcalin régulé, compris entre 9 et 12, et une température pouvant atteindre 80°C.

Les ions borates contaminants sont ensuite éliminés par passage dans le méthanol ou sur un échangeur d'ions. Finalement, le polydextrose réduit est purifié sur une ou plusieurs résines échangeuses d'ions.

Cependant, ces deux procédés, s'il conduisent à décolorer efficacement le polydextrose, génèrent surtout un produit qui ne présente plus aucun pouvoir réducteur, les conditions d'hydrogénation totale mises en oeuvre éliminant complètement toute source de liaisons insaturées dans les molécules.

Pour remédier à ce problème, il a été proposé dans le brevet EP 338.151 de travailler dans des conditions plus douces, pour assurer la décoloration de glycosides par hydrogénation.

Les glycosides sont ici des composés de type n-butyl glucosides ou alkyl glucosides qui présentent l'inconvénient d'avoir une couleur allant du « jaune sombre » au « café noir », liée aux contaminants de types « humines ».

Plutôt que de mettre en oeuvre, ici encore, des résines d'adsorption, des acides réducteurs ou des agents de blanchiment pour éliminer ces contaminants, il est donc proposé d'avoir recours à une technique d'hydrogénation catalytique particulière.

L'hydrogénation catalytique est ainsi menée dans des conditions de durée pouvant aller jusqu'à 6 à 12 heures, avec un catalyseur choisi parmi les catalyseurs des groupes IB, IIIB, IVB, VI, VII et VIII, les métaux préférés étant Ni, Pt, Ga, Pd, Co et Mo, avec ou sans promoteur.

La température de réaction est plus basse, comprise entre 40 et 50°C, mais le pH de la réaction doit être d'au moins 8 et de préférence compris entre 10 et 13, plus préférentiellement encore entre 11 et 12, car les alkyl glucosides sont des composés stables en milieu alcalin.

La pression d'hydrogénation mise en oeuvre est en outre élevée, de l'ordre de 140 bars.

Il résulte de ce qui précède que les technologies de l'état de la technique ne sont *a priori* pas adaptées à la décoloration de dérivés d'amidon solubles contenant des fibres alimentaires non digestibles, sinon au détriment de leurs caractéristiques physico-chimiques, telles que le pouvoir réducteur, ou au détriment de leur stabilité en pH acide, comme le requièrent par exemple les maltodextrines branchées décrites ci-avant pour leurs domaines applicatifs.

Il existe donc un besoin non satisfait de disposer de dérivés d'amidon solubles contenant des fibres alimentaires non digestibles qui présentent une coloration réduite et qui puissent conserver leurs caractéristiques physico-chimiques, notamment en terme de pouvoir réducteur, et éventuellement qui puissent bénéficier d'une plus grande stabilité dans le temps aux pH acides.

La société Demanderesse a eu le mérite de concilier tous ces objectifs réputés jusqu'alors inconciliables en imaginant et élaborant, au prix de nombreuses recherches, de nouveaux types de produits, à savoir des dérivés d'amidon hydrogénés solubles contenant des fibres alimentaires non digestibles particuliers.

Les dérivés d'amidon hydrogénés solubles contenant des fibres alimentaires non digestibles conformes à l'invention sont ainsi caractérisés par le fait qu'ils présentent :

- une valeur de coloration ICUMSA diminuée d'au moins 50 % et
- une teneur en sucres réducteurs diminuée d'au plus 30 %,

par rapport aux dérivés d'amidon solubles contenant des fibres à partir desquels ils sont préparés.

A la meilleure connaissance de la société Demanderesse, pour conserver les propriétés applicatives des dérivés d'amidon hydrogénés solubles contenant des fibres alimentaires non digestibles conformes à l'invention, il ne faut pas que leur teneur en sucres réducteurs soit de 30 % inférieure aux dérivés d'amidon à partir desquels ils sont préparés.

La mesure de la coloration ICUMSA des dérivés d'amidon solubles, hydrogénés ou non, contenant des fibres alimentaires non digestibles conformes à l'invention est effectuée de la manière suivante.

On prépare une solution de dérivés d'amidon solubles, hydrogénés ou non, contenant des fibres alimentaires non digestibles conformes à l'invention à une concentration de 200 g/l, et l'on mesure l'absorbance à 420 nm dans une cuvette plastique d'1 cm de trajet optique.

La mesure de coloration ICUMSA est déterminée par le calcul du rapport suivant :

$$\text{Coloration ICUMSA} = \frac{DO \times 10^5}{c \times d}$$

Où « DO » est la densité optique mesurée à 420 nm, « c » la concentration de la solution, et « d » sa densité.

Les dérivés d'amidon hydrogénés conformes à l'invention présentent donc une valeur de coloration ICUMSA réduite d'au moins 50 %, pour une teneur en sucres réducteurs réduite d'au plus 30 %.

Comme il sera exemplifié ci-après, la coloration ICUMSA de certaines dextrines indigestibles du commerce est de l'ordre de 1500 unités. Leur taux de fibres insolubles est généralement de l'ordre de 25 % sur matière sèche, valeur déterminée selon la méthode AOAC N° 985-29 (1986), et leur teneur en sucres réducteurs est de l'ordre de 9 %.

Conformément à l'invention, la société Demanderesse propose des produits dérivés qui présentent une coloration ICUMSA d'au plus 800 unités, de préférence d'au plus 750 unités, et une teneur en sucres réducteurs certes diminuée mais d'au moins 6 % sec/sec.

On constate par ailleurs que leur taux de fibres insolubles est inchangé, et reste de l'ordre de 25 %.

Quant à la coloration ICUMSA des maltodextrines branchées décrites dans la demande de brevet EP 1.006.128, un produit par exemple caractérisé par 32 % de liaisons glucosidiques 1-6, un taux de sucres réducteurs de 2,5 %, un indice de polymolécularité de 2,15 et une masse moléculaire moyenne en nombre Mn de 2480 g/mole, présente une coloration de l'ordre de 900 unités. Comme indiqué précédemment, son taux de fibres insolubles est de l'ordre de 55 % sur matière sèche, valeur déterminée selon la méthode AOAC N° 985-29 (1986).

Désormais, la société Demanderesse peut proposer les produits dérivés conformes à l'invention avec une coloration ICUMSA d'au plus 400 unités, de préférence d'au plus 350 unités, et une teneur en sucres réducteurs certes diminuée mais d'au moins 2 % sec/sec.

Ici encore, on constate que ces dérivés d'amidon hydrogénés contenant des fibres alimentaires non digestibles conformes à l'invention présentent un taux de fibres insolubles inchangé de l'ordre de 55 %.

Des mesures complémentaires ont été effectuées par ailleurs afin de déterminer l'évolution de la coloration des dérivés d'amidon hydrogénés conformes à l'invention, en fonction du pH.

Ce test consiste à préparer des solutions de dérivés d'amidon solubles contenant des fibres alimentaires non digestibles sous leur forme hydrogénée ou non à 500 g/l, à ajuster le pH desdites solutions à des valeurs de pH acide, neutre et basique, et à mesurer l'écart de coloration après chauffage des solutions ainsi préparées pendant 15 minutes à 80°C.

Comme il sera exemplifié ci-après, la valeur de coloration ICUMSA des dérivés d'amidon hydrogénés solubles contenant des fibres alimentaires non digestibles conformes à l'invention est stable en milieu acide et présente une instabilité d'autant plus importante que l'on se rapproche des pH alcalins.

Cette stabilité à pH acide autorise l'utilisation des dérivés d'amidon hydrogénés solubles contenant des fibres alimentaires non digestibles conformes à l'invention dans les secteurs alimentaires où l'absence de coloration dans des conditions de préparation acide est requise pour les applications visées.

Pour préparer des dérivés d'amidon hydrogénés solubles contenant des fibres alimentaires non digestibles conformes à l'invention, le procédé de décoloration consiste à hydrogéner lesdits dérivés d'amidon dans des conditions telles qu'elles ne diminuent pas de plus de 30 % la teneur en sucres réducteurs, tout en abaissant de manière significative leur coloration, i.e. d'au moins 50 %.

Dans un premier mode de décoloration des dérivés d'amidon solubles contenant des fibres alimentaires non digestibles, on effectue l'hydrogénation des dérivés d'amidon avec de l'hydrogène en présence d'un catalyseur.

Le catalyseur est avantageusement choisi dans le groupe constitué par le nickel, le ruthénium, le palladium et le platine, et préférentiellement le nickel.

Pour régler les conditions d'hydrogénation de manière à diminuer la coloration d'un facteur significatif, i.e. d'au moins 50 %, et de manière à ce que la teneur en sucres réducteurs des dérivés d'amidon solubles hydrogénés contenant des fibres alimentaires non digestibles conformes à l'invention ne diminue pas de plus de 30 %, la société Demanderesse a trouvé qu'il faut avantageusement travailler avec un produit ayant une matière sèche comprise entre 10 et 40 % sur sec, de préférence comprise entre 15 et 25 % sur sec, l'hydrogénation étant alors préférentiellement conduite à une température comprise entre 30 et 90°C.

De manière avantageuse, l'hydrogénation est conduite à une pression comprise entre 1 et 50 bars, pendant une durée de 0,5 à 5 heures, de préférence entre 0,5 et 2 heures.

Il est du mérite de la société Demanderesse d'avoir sélectionné les conditions opératoires permettant d'équilibrer au mieux le traitement d'hydrogénation, c'est-à-dire abaissant au maximum la coloration du produit à traiter, sans trop diminuer son pouvoir réducteur.

Ces conditions d'hydrogénation sont de loin inférieures aux conditions de température et de pression communément décrites pour décolorer, en le réduisant totalement, le polydextrose.

Dans un second mode de décoloration des dérivés d'amidon solubles contenant des fibres alimentaires non digestibles, on effectue l'hydrogénation en présence d'un agent réducteur choisi dans le groupe constitué par le borohydrure de sodium et le borohydrure de potassium, de préférence le borohydrure de sodium.

L'hydrogénation est alors conduite avec moins de 0,5 % sec/sec de borohydrure de sodium et à un pH non régulé inférieur à 9.

Il est ainsi du mérite de la société Demanderesse d'avoir montré que l'on pouvait concilier la décoloration des dérivés d'amidon solubles contenant des fibres alimentaires non digestibles de plus de 50 %, sans que leur teneur en sucres réducteurs ne diminue de plus de 30 %, en sélectionnant très précisément les quantités de borohydrure à au plus 0,5 % sec/sec, à température ambiante et sans régulation de pH.

La société Demanderesse a en effet montré que pour une solution de dérivés d'amidon solubles contenant des fibres alimentaires non digestibles d'une matière sèche comprise entre 10 et 40 % sur sec, de préférence comprise entre 15 et 25 % sur sec, une quantité de borohydrure supérieure ou égale à 0,5 % sec/sec en fait perdre tout le pouvoir réducteur.

D'autres caractéristiques et avantages de l'invention apparaîtront à la lecture des exemples qui suivent. Ils ne sont toutefois donnés ici qu'à titre illustratif et non limitatif.

**Exemple 1**

On prépare, conformément au brevet EP 1.006.128, une solution de maltodextrines branchées, renfermant 32 % de liaisons glucosidiques 1-6, un taux de sucres réducteurs de 2,5 %, un indice de polymolécularité de 2,15 et une masse moléculaire moyenne en nombre $M_n$ de 2480 g/mole, à une matière sèche de 20 %.

La coloration ICUMSA est déterminée à une valeur de 900 unités.

On procède à l'hydrogénation de la dite solution en présence de catalyseur Nickel de Raney à raison de 5 % sec/sec, l'hydrogène étant apporté sous une pression de 40 bars. La réaction est effectuée aux trois températures de 40, 80 et 130°C pendant 1 heure, sous agitation à 1600 rpm, dans un réacteur d'hydrogénation batch de 600 ml.

Le tableau I suivant présente les valeurs de coloration ICUMSA et les teneurs en sucres réducteurs mesurées à la fin de la réaction.

Tableau I

| Température de réaction | Coloration ICUMSA | | Teneur en sucres réducteurs (%) | |
|---|---|---|---|---|
| | départ | Hydrogéné | départ | Hydrogéné |
| 40°C | 900 | 645 | 2,5 | 2,4 |
| 80°C | 900 | 350 | 2,5 | 2 |
| 130°C | 900 | 120 | 2,5 | 0,6 |

Les conditions d'hydrogénation qui permettent au mieux d'obtenir la baisse de coloration la plus satisfaisante, sans trop altérer le contenu en sucres réducteurs sont donc celles qui fixent la température d'hydrogénation d'une solution à 20 % de MS à une valeur de 80°C, pour une pression de 40 bars en 1 heure de réaction.

On obtient alors un dérivé d'amidon soluble hydrogéné contenant des fibres alimentaires non digestibles conforme à l'invention, c'est-à-dire dont la coloration ICUMSA a été diminuée de 60 %, et la teneur en sucres réducteurs diminuée de l'ordre de 20 %.

Une première étude complémentaire a été entreprise pour tester le recyclage du catalyseur lors des décolorations desdits dérivés d'amidon solubles contenant des fibres alimentaires non digestibles par le nickel de Raney. Quatre recyclages ont été effectués, à 80°C, sous 40 bars d'hydrogène et pendant 1 heure de réaction, et la qualité du catalyseur recyclé a été déterminée en regard de sa capacité à hydrogéner du glucose.

La mesure de la constante de vitesse permet alors d'estimer l'évolution du catalyseur. Il a ainsi été trouvé que même si le catalyseur montrait une légère baisse d'activité, la coloration du produit final évoluant de 350 à 450 au fur et à mesure des recyclages, la constante de vitesse reste constante à 1,3 Rch$^{-1}$, identique au catalyseur neuf. Il est donc tout à fait possible de concevoir un recyclage du catalyseur.

Une seconde étude complémentaire a été réalisée pour déterminer la stabilité de la coloration des produits au pH acide. On choisit le dérivé d'amidon soluble hydrogéné contenant des fibres alimentaires non digestibles conforme à l'invention, présentant une coloration ICUMSA de 350 unités. Le produit d'origine présente une coloration ICUMSA de 900 unités. Le test de stabilité est donc effectué par la mesure de la coloration ICUMSA d'une solution à pH variable (acide, neutre et basique) renfermant 500 g/l du produit à tester chauffée 15 minutes à 80 °C.

Le tableau II suivant reprend les valeurs de coloration obtenues avant et après traitement thermique.

Tableau II

| | PH acide = 4,5 à 5 to 15 min | | PH neutre = 6,9 - 7 to 15 min | | PH basique = 9,8 - 9,9 to 15 min | |
|---|---|---|---|---|---|---|
| Produit de départ | 900 | 940 | 940 | 1060 | 1060 | 5595 |
| Produit hydrogéné conforme à l'invention | 350 | 325 | 350 | 675 | 600 | 7700 |

Les résultats montrent que les produits ainsi décolorés présentent une remarquable stabilité à pH acide, qui autorise l'utilisation des dérivés d'amidon hydrogénés solubles contenant des fibres alimentaires non digestibles conformes à l'invention dans les secteurs alimentaires où l'absence de coloration en conditions de préparation acide est requise pour les applications visées.

**Exemple 2**

On prépare une solution de dextrines indigestibles, commercialisées par MATSUTANI sous la marque FIBERSOL 2E, à une matière sèche de 20 %.

La coloration ICUMSA est déterminée à une valeur de 1450 unités.

On procède à l'hydrogénation de la dite solution en présence de catalyseur Nickel de Raney à raison de 5 % sec/sec, l'hydrogène étant apporté sous une pression de 40 bars. La réaction est effectuée à la température de 80°C pendant 1 heure, conformément aux conditions optimisées de l'exemple 1, sous agitation à 1600 rpm, dans un réacteur d'hydrogénation batch de 600 ml.

Le tableau III suivant présente les valeurs de coloration ICUMSA et les teneurs en sucres réducteurs mesurées à la fin de la réaction.

Tableau III

| Température de réaction | Coloration ICUMSA | | Teneur en sucres réducteurs (%) | |
|---|---|---|---|---|
| | Départ | Hydrogéné | départ | Hydrogéné |
| 80°C | 1490 | 740 | 8,8 | 6,6 |

On obtient alors un dérivé d'amidon soluble hydrogéné contenant des fibres alimentaires non digestibles conforme à l'invention, i.e. dont la coloration ICUMSA a été diminuée de 51 %, et la teneur en sucres réducteurs diminuée de l'ordre de 25 %.

**Exemple 3**

On prépare une solution de maltodextrines branchées, renfermant 32 % de liaisons glucosidiques 1-6, un taux de sucres réducteurs de 2,5 %, un indice de polymolécularité de 2,15 et une masse moléculaire moyenne en nombre Mn de 2480 g/mole, à une matière sèche de 20 %, identique à celle de l'exemple 1. La coloration ICUMSA est de 900 unités.

On ajoute 0,1 % sec/sec de borohydrure de sodium à température ambiante, à pression atmosphérique, et on laisse la réaction s'effectuer durant 1 heure sans régulation de pH. Le pH final de la réaction est de 8,5.

On obtient un produit présentant une coloration ICUMSA de 200 unités, pour une teneur en sucres réducteurs de 1,8 %.

On obtient alors un dérivé d'amidon soluble hydrogéné contenant des fibres alimentaires non digestibles conforme à l'invention, i.e. dont la coloration ICUMSA a été diminuée de 78 %, et la teneur en sucres réducteurs diminuée de l'ordre de 28 %.

**Revendications**

1. Procédé de décoloration de dérivés d'amidon solubles contenant des fibres alimentaires non digestibles, **caractérisé par le fait qu'**il consiste à hydrogéner lesdits dérivés d'amidon dans des conditions telles et qu'elles n'en diminuent de pas plus de 30 % la teneur en sucres réducteurs et que la valeur de coloration ICUMSA est diminuée d'au moins 50 %.

2. Procédé selon la revendication 1, **caractérisé en ce que** l'hydrogénation des dérivés d'amidon s'effectue avec de l'hydrogène en présence d'un catalyseur.

3. Procédé selon la revendication 2, **caractérisé par le fait que** le catalyseur est choisi dans le groupe constitué par le nickel, le ruthénium, le palladium et le platine, et préférentiellement le nickel.

4. Procédé selon l'une ou l'autre des revendications 2 et 3, **caractérisé par le fait que** l'hydrogénation est conduite à une température comprise entre 30 et 90°C,

5. Procédé selon la revendication 4, **caractérisé par le fait que** l'hydrogénation est conduite à une pression comprise entre 1 et 50 bars, pendant une durée de 0,5 à 5 heures, de préférence entre 0,5 et 2 heures.

6. Procédé selon la revendication 1 **caractérisé en ce que** l'hydrogénation des dérivés d'amidon s'effectue en présence d'un agent réducteur choisi dans le groupe constitué par le borohydrure de sodium et le borohydrure de potassium, de préférence le borohydrure de sodium

7. Procédé selon la revendication 6, **caractérisé par le fait que** l'hydrogénation est conduite à température ambiante, avec moins de 0,5 % sec/sec de borohydrure de sodium et à un pH non régulé inférieur à 9.

8. Procédé selon l'une quelconque des revendications 2 à 7, **caractérisé par le fait que** la matière sèche du dérivé d'amidon à hydrogéner est comprise entre 10 et 40 %, de préférence comprise entre 15 et 25 %.

9. Dérivés d'amidon hydrogénés solubles contenant des fibres alimentaires non digestibles susceptibles d'être obtenus par le procédé conforme à l'une quelconque des revendications 1 à 8, **caractérisés par le fait qu'**ils présentent :

- une valeur de coloration ICUMSA diminuée d'au moins 50 % et
- une teneur en sucres réducteurs diminuée d'au plus 30 %,

par rapport aux dérivés d'amidon solubles contenant des fibres à partir desquels ils sont préparés.

10. Dérivés d'amidon hydrogénés selon la revendication **caractérisés par le fait que** leur valeur de coloration ICUMSA est stable en milieu acide.

11. Dérivés d'amidon hydrogénés solubles contenant des fibres alimentaires non digestibles selon la revendication 9 ou 10, **caractérisés par le fait qu'**ils présentent :

- une valeur de coloration ICUMSA d'au plus 800 unités, de préférence d'au plus 750 unités,
- une teneur en sucres réducteur d'au moins 6 % sec/sec.

12. Dérivés d'amidon hydrogénés solubles contenant des fibres alimentaires non digestibles, selon la revendication 9 ou 10 **caractérisés par le fait qu'**ils présentent :

- une valeur de coloration ICUMSA d'au plus 400 unités, de préférence d'au plus 350 unités,
- une teneur en sucres réducteurs d'au moins 2 % sec/sec.

13. Utilisation des dérivés d'amidon hydrogénés solubles contenant des fibres alimentaires non digestibles selon l'une quelconque des revendications 9 à 12, pour la préparation de produits alimentaires.

**Claims**

1. Method for decolourizing soluble starch derivatives containing nondigestible dietary fibres, consisting in hydrogenating said starch derivatives under conditions such the reducing sugar content thereof is not reduced by more than 30% and that the ICUMSA coloration value is reduced by at least 50%.

2. Method according to claim 1, **characterized in that** the hydrogenation of the starch derivatives is carried out with hydrogen in the presence of a catalyst.

3. Method according to claim 2, **characterized in that** the catalyst is selected from the group consisting of nickel, ruthenium, palladium and platinum, and preferably nickel.

4. Method according to claim 2 or 3, **characterized in that** the hydrogenation is performed at a temperature of between 30 and 90°C.

5. Method according to claim 4, **characterized in that** the hydrogenation is performed at a pressure of between 1 and 50 bar, for a period of 0.5 to 5 hours, preferably between 0.5 to 2 hours.

6. Method according to claim 1, **characterized in that** the hydrogenation of the starch derivatives is carried out in the presence of a reducing agent selected from the group consisting of sodium borohydride and potassium borohydride, preferably sodium borohydride.

7. Method according to claim 6, **characterized in that** the hydrogenation is performed at room temperature, with less than 0.5% on a dry matter basis of sodium borohydride and at a nonregulated pH of less than 9.

8. Method according to any one of claims 2 to 7, **characterized in that** the dry matter content of the starch derivative to be hydrogenated is between 10 and 40%, preferably between 15 and 25%.

9. Soluble hydrogenated starch derivatives containing nondigestible dietary fibres obtainable by the method according to any one of claims 1 to 8, **characterized in that** they have:

- an ICUMSA coloration value reduced by at least 50%, and
- a reducing sugar content reduced by at most 30%,

compared with the fibre-containing soluble starch derivatives from which they are prepared.

10. Hydrogenated starch derivatives according to claim 9, **characterized in that** their ICUMSA coloration value is stable in acidic medium.

11. Soluble hydrogenated starch derivatives containing nondigestible dietary fibres according to claim 9 or 10, **characterized in that** they have:

   - an ICUMSA coloration value of at most 800 units, preferably at most 750 units,
   - a reducing sugar content of at least 6% on a dry matter basis.

12. Soluble hydrogenated starch derivatives containing nondigestible dietary fibres according to claim 9 or 10, **characterized in that** they have:

   - an ICUMSA coloration value of at most 400 units, preferably at most 350 units,
   - a reducing sugar content of at least 2% on a dry matter basis.

13. Use of soluble hydrogenated starch derivatives containing nondigestible dietary fibres according to any one of claims 9 to 12 for the preparation of food products.


**Patentansprüche**

1. Verfahren zur Entfärbung von löslichen Stärkederivaten enthaltend unverdaubare Ballaststoffe, **dadurch gekennzeichnet, dass** es aus Hydrieren der Stärkederivate unter Bedingungen besteht, derartig, dass sie den Gehalt an reduzierenden Zuckern um nicht mehr als 30 % vermindern und dass der ICUMSA-Farbwert um wenigstens 50 % vermindert wird.

2. Verfahren gemäß Anspruch 1, **dadurch gekennzeichnet, dass** die Hydrierung der Stärkederivate mit Wasserstoff in Anwesenheit eines Katalysators stattfindet.

3. Verfahren gemäß Anspruch 2, **dadurch gekennzeichnet, dass** der Katalysator aus der Gruppe bestehend aus Nickel, Ruthenium, Palladium und Platin ausgewählt wird und vorzugsweise Nickel ist.

4. Verfahren gemäß Anspruch 2 und 3, **dadurch gekennzeichnet, dass** die Hydrierung bei einer Temperatur im Bereich zwischen 30 und 90 °C durchgeführt wird.

5. Verfahren gemäß Anspruch 4, **dadurch gekennzeichnet, dass** die Hydrierung bei einem Druck im Bereich zwischen 1 und 50 bar für eine Dauer von 0,5 bis 5 Stunden, vorzugsweise zwischen 0,5 und 2 h durchgeführt wird.

6. Verfahren gemäß Anspruch 1, **dadurch gekennzeichnet, dass** die Hydrierung der Stärkederivate in Anwesenheit eines Reduktionsmittels ausgewählt aus der Gruppe bestehend aus Natriumborhydrid und Kaliumborhydrid, vorzugsweise Natriumborhydrid, stattfindet.

7. Verfahren gemäß Anspruch 6, **dadurch gekennzeichnet, dass** die Hydrierung bei Umgebungstemperatur mit wenigstens 0,5% trocken/trocken Natriumborhydrid bei einem nicht geregelten pH unterhalb von 9 durchgeführt wird.

8. Verfahren gemäß einem der Ansprüche 2 bis 7, **dadurch gekennzeichnet, dass** das Trockengewicht des Stärkederivats, das hydriert werden soll, in einem Bereich zwischen 10 und 40 %, vorzugsweise in einem Bereich zwischen 15 und 25 % liegt.

9. Lösliche hydrierte Stärkederivate enthaltend unverdaubare Ballaststoffe erhältlich durch das Verfahren gemäß einem der Ansprüche 1 bis 8, **dadurch gekennzeichnet, dass** sie aufweisen:

   - einen ICUMSA-Farbwert, der um wenigstens 50% vermindert ist,
   - einen Gehalt an reduzierenden Zuckern, der um höchstens 30% vermindert ist,

gegenüber den Ballaststoffe enthaltenden löslichen Stärkederivaten, aus denen sie hergestellt worden sind.

**10.** Hydrierte Stärkederivate gemäß Anspruch 9, **dadurch gekennzeichnet, dass** der ICUMSA-Farbwert in saurer Umgebung stabil ist.

**11.** Hydrierte Stärkederivate gemäß Anspruch 9 oder 10 enthaltend unverdaubare Ballaststoffe, **dadurch gekennzeichnet, dass** sie aufweisen:

- einen ICUMSA-Farbwert von höchstens 800 Einheiten, vorzugsweise von höchstens 750 Einheiten
- einen Gehalt an reduzierenden Zuckern von wenigstens 6 % trocken/trocken.

**12.** Hydrierte Stärkederivate gemäß Anspruch 9 oder 10 enthaltend unverdaubare Ballaststoffe, **dadurch gekennzeichnet, dass** sie aufweisen:

- einen ICUMSA-Farbwert von höchstens 400 Einheiten, vorzugsweise von höchstens 350 Einheiten
- einen Gehalt an reduzierenden Zuckern von wenigstens 2 % trocken/trocken.

**13.** Verwendung von hydrierten Stärkederivaten gemäß einem der Ansprüche 9 bis 12 enthaltend unverdaubare Ballaststoffe zur Herstellung von Nahrungsprodukten.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 368451 A
- US 5264568 A
- EP 530111 A
- EP 1006128 A
- EP 477089 A

- EP 485304 A
- EP 516491 A
- US 4622233 A
- WO 9214761 A
- EP 338151 A

**Littérature non-brevet citée dans la description**

- **ENGLYST ; CUMMINGS.** *American Journal of Clinical Nutrition,* 1987, vol. 45, 423-431